(19) Europäisches Patentamt / European Patent Office / Office européen des brevets

(11) **EP 4 596 370 B1**

(12) **EUROPÄISCHE PATENTSCHRIFT**

(45) Veröffentlichungstag und Bekanntmachung des Hinweises auf die Patenterteilung:
**08.04.2026 Patentblatt 2026/15**

(21) Anmeldenummer: **25155149.5**

(22) Anmeldetag: **31.01.2025**

(51) Internationale Patentklassifikation (IPC):
**B62D 5/04** *(2006.01)*      **B62D 15/02** *(2006.01)*
**G01D 5/14** *(2006.01)*      **G01D 3/08** *(2006.01)*
**G01D 5/04** *(2006.01)*

(52) Gemeinsame Patentklassifikation (CPC):
**B62D 15/0215; B62D 5/049;** B62D 15/021;
G01D 3/08; G01D 5/04; G01D 5/145; G01D 2205/26

(54) **VERFAHREN ZUM BETRIEB EINER DREHWINKELSENSOREINHEIT ZUM EINSATZ BEI LENKSYSTEMEN VON KRAFTFAHRZEUGEN, DREHWINKELSENSOREINHEIT, LENKSYSTEM UND KRAFTFAHRZEUG**

METHOD FOR OPERATING A ROTATION ANGLE SENSOR UNIT FOR USE IN STEERING SYSTEMS OF MOTOR VEHICLES, ROTATION ANGLE SENSOR UNIT, STEERING SYSTEM AND MOTOR VEHICLE

PROCÉDÉ DE FONCTIONNEMENT D'UNE UNITÉ DE CAPTEUR D'ANGLE DE ROTATION DESTINÉE À ÊTRE UTILISÉE DANS DES SYSTÈMES DE DIRECTION DE VÉHICULES AUTOMOBILES, UNITÉ DE CAPTEUR D'ANGLE DE ROTATION, SYSTÈME DE DIRECTION ET VÉHICULE AUTOMOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **02.02.2024 BE 202405067**

(43) Veröffentlichungstag der Anmeldung:
**06.08.2025 Patentblatt 2025/32**

(73) Patentinhaber:
• **thyssenkrupp Presta AG**
**9492 Eschen (LI)**
• **thyssenkrupp AG**
**45143 Essen (DE)**

(72) Erfinder:
• **Arányi, Miklós**
**9450 Altstätten (CH)**
• **Toth, Andras**
**2360 Gyál (HU)**
• **Bodnár, Bence**
**6100 Kiskunfélegyháza (HU)**

(74) Vertreter: **thyssenkrupp Intellectual Property GmbH**
**ThyssenKrupp Allee 1**
**45143 Essen (DE)**

(56) Entgegenhaltungen:
DE-A1- 102014 208 658      DE-A1- 102017 106 703
DE-A1- 102020 117 051

**Beschreibung**

Die zu Grunde liegende Erfindung betrifft ein Verfahren zum Betrieb einer Drehwinkelsensoreinheit zum Einsatz bei Lenksystemen von Kraftfahrzeugen, eine Drehwinkelsensoreinheit, ein Lenksystem und ein Kraftfahrzeug.

Für sicherheitsrelevante elektrische bzw. elektronische Systeme in Kraftfahrzeugen, wie beispielsweise elektrisch unterstützte oder autonome Fahr- und Bremsfunktionen, ist es üblich, dass solche Systeme gewissen Sicherheitsnormen entsprechen.

Bei Kraftfahrzeugen hat sich in diesem Zusammenhang u.a. die sog. ASIL-Risikoklassifizierung der übergeordneten ISO-Norm ISO 26262 etabliert. Gerade sicherheitskritische Anwendungen, wie z.B. bei Steer-by-Wire-Lenksysteme und Systeme zum autonomen Fahren, erfordern in der Regel sehr strenge Sicherheitsanforderungen, beispielsweise gemäß dem höchsten Level "D" der ASIL-Risikoklassifizierung (ASIL-D; ASIL: Automotive Safety Integrity Level, übersetzt: Fahrzeugsicherheits-Integritätslevel). So sind beispielsweise für das höchste Level D eine redundante Signalerfassung und entsprechende Plausibilisierungen der Signale erforderlich, um das Risiko eines Systemausfalls mit den entsprechenden Folgen zu minimieren.

Aus der DE 10 2014 208 658 A1 ist beispielsweise ein Drehwinkelsensor bekannt, bei dem der Drehwinkel der Lenkwelle durch zwei ineinandergreifende Zahnräder ermittelt wird. Dabei ist vorgesehen, dass ein erstes Zahnrad drehfest und bezüglich der Drehachse des rotierenden Bauteils koaxial am rotierbaren Bauteil zu befestigen ist. Das zweite Zahnrad weist eine zum ersten Zahnrad parallele Drehachse auf und greift mit einem äußeren Zahnkranz in den äußeren Zahnkranz des ersten Zahnrads ein. Bei Drehung des zweiten Zahnrads als Folge einer Rotation des mit dem rotierenden Bauteil gekoppelten ersten Zahnrads bewegt sich das zweite Zahnrad durch ein auf der Drehachse vorgesehenes und mit dem zweiten Zahnrad in Eingriff befindliches Schraubengewinde auch in axialer Richtung. Durch Erfassung der Drehwinkel der beiden Zahnräder und der Position des zweiten Zahnrads auf dem Schraubengewinde kann der absolute Drehwinkel der Lenkwelle oder des damit gekoppelten Lenkrads ermittelt werden.

Gemäß der DE 10 2014 208 658 A1 ist eine Plausibilisierung des absoluten Drehwinkels über die axiale Position des zweiten Zahnrads möglich, wobei der absolute Drehwinkel nach dem Nonius-Prinzip ermittelt wird.

Der in der DE 10 2008 033 236 A1 vorgeschlagene Drehwinkelsensor für eine Lenkwelle umfasst mehrere Zahnräder zur Ermittlung des absoluten Drehwinkels nach dem Nonius-Prinzip. Allerdings ist der daraus bekannte Sensor lediglich ASIL-C konform.

Aus der DE 10 2014 105 682 A1 ist ein Verfahren bekannt, bei dem zur Plausibilisierung eines Nonius-basierten Drehwinkelsensors zusätzlich eine Rotorlage eines Rotors eines Servomotors einer Hilfskraftlenkung verwendet wird. Es können ASIL-D geeignete Sensorwerte erzeugt werden. Allerdings ist hierbei stets ein zusätzlicher Servomotor erforderlich.

Ausgehend davon ist es eine Aufgabe der Erfindung ein neues, insbesondere verbessertes Verfahren zum Betrieb einer Drehwinkelsensoreinheit, die zum Einsatz bei Lenksystemen von Kraftfahrzeugen vorgesehen ist, bereitzustellen. Insbesondere soll ein Verfahren bereitgestellt werden, welches bei vergleichsweise einfach aufgebauter Drehwinkelsensoreinheit, eine Plausibilisierung, insbesondere entsprechend des ASIL-D Integritätslevels, von ermittelten absoluten Drehwinkeln ermöglicht und/oder welches hinsichtlich eines Betriebs auf einem vorgegebenen Fahrzeugsicherheits-Integritätslevel, insbesondere ASIL-D, vergleichsweise zuverlässig ist und eine verbesserte Ausfallsicherheit bieten kann. Es sollen ferner eine Drehwinkelsensoreinheit, ein Lenksystem und ein Kraftfahrzeug bereitgestellt werden.

Diese Aufgabe wird gelöst durch die unabhängigen Ansprüche 1 und 8. Ausgestaltungen ergeben sich aus den abhängigen Ansprüchen und der nachfolgenden Beschreibung. Nach einer Ausgestaltung ist ein Verfahren zum Betrieb einer Drehwinkelsensoreinheit vorgesehen, der zum Einsatz bei Lenksystemen von Kraftfahrzeugen eingerichtet ist. Insbesondere soll das Verfahren einen Betrieb auf einem vorgegebenen Fahrzeugsicherheits-Integritätslevel, insbesondere ASIL-D, ermöglichen. Insbesondere ist das Verfahren eingerichtet zur Ermittlung eines Absolutdrehwinkels, d.h. insbesondere eines plausibilisierten absoluten Drehwinkels, einer Lenkungskomponente eines Kraftfahrzeugs, wobei der Absolutdrehwinkel insbesondere ASIL-D konform ermittelt wird.

Die Drehwinkelsensoreinheit ist dazu ausgebildet, den absoluten Drehwinkel einer Lenkungskomponente, insbesondere den absoluten Drehwinkel eines Lenksystems bzw. Lenkungssystems, insbesondere des Lenkrads oder einer Lenkwelle, zu ermitteln.

Insbesondere ist die Drehwinkelsensoreinheit dazu ausgebildet und vorgesehen, zum Einsatz bei einem sog. Steer-by-Wire-Lenksystem.

Lenksysteme von Kraftfahrzeugen sind in der Regel so ausgelegt, dass das ein Lenkeinschlag, d.h. eine Drehung des Lenkrads oder einer zugeordneten Lenkwelle mehrere Umdrehungen im oder gegen den Uhrzeigersinn umfassen kann. Das bedeutet, dass der Drehwinkel nicht vollständig bzw. nicht eindeutig durch einen Winkelbereich von 0° bis 360° beschreibbar ist. Dies bedingt, dass zur Bestimmung des gesamten Drehwinkels sowohl die Anzahl der vollständigen Umdrehungen als auch der über eine vollständige Umdrehung hinausgehende oder unter einer vollständigen Umdrehung zurückbleibende Drehwinkel ermittelt werden muss. Analoges gilt für diverse andere rotierende bzw. rotierbare Komponenten bei Kraftfahrzeugen.

In diesem Zusammenhang und im Sinne der zu Grunde liegenden Erfindung wird unter einem relativen Drehwinkel der einer nicht vollständigen Umdrehung zugeordnete Winkelbereich zwischen 0° und 360° verstanden. Unter einem absoluten Drehwinkel wird im Sinne der zu Grunde liegende Erfindung derjenige Winkelbereich verstanden, der neben dem jeweiligen relativen Drehwinkel auch die Anzahl der vollständigen Umdrehungen umfasst. Dies sei anhand eines Beispiels erläutert. Wird ein Lenkrad beispielsweise um 1¼ Umdrehungen eingeschlagen, so ergibt sich für den relativen Drehwinkel ein Winkel von +/-360°/4, also +/-90°, und für den absoluten Drehwinkel ergibt sich ein Winkel von +/-360°+90°, also +/-450°, je nach Drehrichtung.

Insbesondere bei Lenksystemen, wie Steer-by-Wire-Lenksystemen, bei welchen eine Drehbewegung des Lenkrads nicht mechanisch, sondern elektrisch auf die gelenkten Räder übertragen wird, ist es erforderlich, den absoluten Drehwinkel des Lenkrads bzw. der Lenkwelle zuverlässig und sicher ermitteln zu können.

Dem Verfahren gemäß der Erfindung liegt eine Drehwinkelsensoreinheit zu Grunde, die eine Ermittlung des absoluten Drehwinkels, insbesondere eines plausibilisierten zusammengeführten absoluten Drehwinkels, bzw. Absolutdrehwinkels, einer drehbaren bzw. rotierbaren Lenkungskomponente eines Lenksystems ermöglicht.

Die Drehwinkelsensoreinheit umfasst ein im Sinne eines Rotorpaars zu verstehendes Zahnradpaar, deren Zahnräder parallele Drehachsen und unterschiedliche Durchmesser aufweisen. Die Zahnräder des Zahnradpaars sind ineinandergreifend, bzw. greifen ineinander, insbesondere indem umfangsseitige Zahnkränze im gegenseitigen Eingriff sind. Das bedeutet, dass die Drehung eines der Zahnränder auf Grund der ineinandergreifenden mechanischen Kopplung eine Drehung des anderen Zahnrads bewirkt. Die mechanische Kopplung ermöglicht eine vergleichsweise zuverlässige, spielfreie Übertragung der Drehbewegungen. Aus den Drehbewegungen der Zahnräder kann der absolute Drehwinkel insbesondere basierend auf dem Nonius-Prinzip ermittelt werden. Ein Beispiel zur Ermittlung eines absoluten Drehwinkels ist in der eingangs genannten DE 10 2008 033 236 A1 beschrieben.

Bei der zur Umsetzung des hierin vorgeschlagenen Verfahrens vorgesehenen Drehwinkelsensoreinheit ist ein erstes Zahnrad des Zahnradpaars dazu vorgesehen, drehfest und drehsynchron mit der Lenkungskomponente verbunden zu werden. Ein zweites Zahnrad des Zahnradpaars ist bezüglich des ersten Zahnrads ortsfest drehbar gelagert.

Ferner sind dem ersten Zahnrad zwei erste Drehwinkelsensoren und dem zweiten Zahnrad sind zwei zweite Drehwinkelsensoren zugeordnet, die jeweils dazu eingerichtet sind, einen relativen Drehwinkel des jeweiligen Zahnrads zu erfassen. Die Drehwinkelsensoren können insbesondere magnetbasierte Sensoren, optische Sensoren, Wirbelstromsensoren oder anderweitige Sensoren zur Erfassung des Drehwinkels des jeweiligen Zahnrads sein.

Die Drehwinkelsensoreinheit umfasst ferner eine Steuereinheit mit zwei unabhängigen Steuerungseinheiten, wobei jeder Steuerungseinheit ein erster und zweiter Drehwinkelsensor zugeordnet ist. Ferner sind die Steuerungseinheiten jeweils dazu eingerichtet, aus Drehwinkeldaten oder Drehwinkelsignalen eines jeweils zugeordneten ersten und/oder zweiten Drehwinkelsensors einen absoluten Drehwinkel der Lenkungskomponente zu ermitteln und bereitzustellen. Insbesondere kann jede Steuerungseinheit mit einem ersten und zweiten Drehwinkelsensor signaltechnisch verbunden sein, um entsprechende Drehwinkeldaten oder Drehwinkelsignale der beiden Drehwinkelsensoren zu deren Weiterverarbeitung, insbesondere zur Ermittlung eines absoluten Drehwinkels, zu empfangen.

Zur Ermittlung des absoluten Drehwinkels kann jede Steuerungseinheit einen Überlaufzähler umfassen, mit dem die Anzahl der vollständigen Umdrehungen (360°) bzw. die (relative Anzahl) der Gesamtumdrehungen des jeweiligen Zahnrads erfasst werden kann.

Die Steuerungseinheiten können insbesondere unabhängige Schaltkreise zur Ermittlung des Drehwinkels aus den Drehwinkeldaten aufweisen. Entsprechende Schaltkreise können dabei entweder auf einem gemeinsamen Chip bzw. einem gemeinsamen integrierten Schaltkreis implementiert sein, oder die Schaltkreise können auf unterschiedlichen, unabhängigen Chips und/oder Steuereinheiten implementiert sein.

Die Steuerungseinheiten sind vorzugsweise dazu eingerichtet, jeweils zwei unabhängige, jeweils vom Drehwinkel eines der Zahnräder bzw. von Drehwinkeldaten eines jeweiligen ersten Drehwinkelsensors des ersten Zahnrads und von Drehwinkeldaten eines jeweiligen zweiten Drehwinkelsensors des zweiten Zahnrads abhängige absolute Drehwinkel zu ermitteln.

Die beiden unabhängig voneinander arbeitenden Schaltkreise können insbesondere in einem gemeinsamen Gehäuse oder in separaten Gehäusen angeordnet sein. Die Schaltkreise können als bauliche Einheit mit den Zahnrädern implementiert sein, oder die Schaltkreise können separat ausgebildet und durch Datenleitungen, insbesondere einen Daten-Bus, mit den Drehwinkelsensoren verbunden sein.

Durch die Verwendung unabhängiger Steuerungseinheiten ist es möglich, ASIL-B oder ASIL-D-konform absolute Drehwinkel zu ermitteln.

Verfahrensgemäß ist vorgesehen, dass zum Betrieb der Drehwinkelsensoreinheit mit dem vorgegebenen Fahrzeugsicherheits-Integritätslevel, insbesondere einem Integritätslevel ASIL-D, bei Initialisierung der Drehwinkelsensoreinheit bzw. beim Start oder Einschalten der Drehwinkelsensoreinheit,

○ jede Steuerungseinheit unter Verwendung von Drehwinkeldaten sowohl des jeweils zugeordneten ersten als auch des jeweils zugeordneten zweiten Drehwinkelsensors einen initialen, d.h. einen zu Zeitpunkt der Initialisierung ermittelten, absoluten Drehwinkel für die Lenkungskomponente ermittelt,

⚬ die Steuerungseinheiten bezüglich der ermittelten initialen absoluten Drehwinkel einmalig initial synchronisiert werden,

und jede Steuerungseinheit nach initialer Synchronisierung

⚬ aus Drehwinkeldaten eines zugeordneten ersten Drehwinkelsensors einerseits und aus Drehwinkeldaten eines zugeordneten zweiten Drehwinkelsensors andererseits fortlaufend jeweils einen ersten und zweiten absoluten Drehwinkel der Lenkungskomponente ermittelt, diese plausibilisiert und zu einem Absolutdrehwinkel, der insbesondere einem absoluten Drehwinkel der Lenkungskomponente zusammenführt.

Die Ermittlung des absoluten Drehwinkels bei Initialisierung kann insbesondere nach dem Nonius-Prinzip erfolgen, wobei die Drehwinkel des ersten und des jeweils Zahnrads verwendet werden können. Insbesondere kann jede der unabhängigen Steuerungseinheiten aus Drehwinkeldaten jeweils eines ersten Zahnrads bzw. eines ersten Drehwinkelsensors und aus Drehwinkeldaten jeweils eines zugeordneten zweiten Zahnrads bzw. eines zweiten Drehwinkelsensors einen absoluten Drehwinkel ermitteln, der das Integritätslevel ASIL-B aufweist. Durch Synchronisation, insbesondere Plausibilisierung, Verifizierung, insbesondere durch Vergleich, der beiden ASIL-B Drehwinkel ist es möglich, Integritätslevel ASIL-D konforme Drehwinkel zu ermitteln.

Nach der Synchronisierung ermittelt jede der Steuereinheiten insbesondere zwei absolute Drehwinkel, wobei einer der absoluten Drehwinkel basierend auf bzw. aus Drehwinkeldaten des ersten Zahnrads, bzw. des jeweiligen ersten Drehwinkelsensors, und ein zweiter der Drehwinkel basierend auf bzw. aus Drehwinkeldaten des zweiten Zahnrads, bzw. des jeweiligen zweiten Drehwinkelsensors ermittelt werden können.

Aufgrund der initialen Synchronisierung auf ASIL-D weisen die beiden absoluten Drehwinkel folglich jeweils zumindest das Integritätslevel ASIL-B auf. Aus den entsprechenden beiden ASIL-B Drehwinkeln einer Steuerungseinheit kann durch Plausibilisierung ein ASIL-D klassifizierter absoluter Drehwinkel ermittelt werden, insbesondere indem die beiden Drehwinkel zu einem Absolutdrehwinkel zusammengeführt werden, insbesondere wenn die Plausibilisierung, die einen Vergleich der beiden Drehwinkel umfassen kann, ergibt, dass eine Abweichung der beiden Drehwinkel kleiner als ein vorgegebener Grenzwert zur Drehwinkelabweichung ist. Unter dem Begriff "Absolutdrehwinkel" soll ein Winkel verstanden werden, den die entsprechende Steuerungseinheit als absoluten Drehwinkel der Lenkungskomponente des Kraftfahrzeugs insbesondere weiteren elektronischen Komponenten des Kraftfahrzeugs bereitstellen kann.

Mithin ist es möglich, dass nach initialer Synchronisierung beide Steuerungseinheiten jeweils einen absoluten Drehwinkel der ASIL-D Integritätsstufe ermitteln bzw. bereitstellen können. Das hat insbesondere den Vorteil, dass selbst bei Ausfall einer der Steuerungseinheiten weiterhin ein ASIL-D konformer absoluter Drehwinkel bzw. Absolutdrehwinkel bereitgestellt werden kann.

Vorzugsweise handelt es sich bei den Steuerungseinheiten bzw. Sensoreinheiten um Komponenten mit sog. sogenannten TPO-Eigenschaften (TPO: true power on), wobei ein TPO-Sensor bzw. ein entsprechendes Signal die Eigenschaft aufweist, dass dieses unmittelbar nach dem Einschalten bzw. nach der Initialisierung einen konkreten, insbesondere korrekten Wert, liefern kann. Mit solchen TPO-Eigenschaften kann mithin bei Initialisierung ein initialer absoluter Drehwinkel bereitgestellt werden. In Ausgestaltungen kann vorgesehen sein, dass die Drehwinkelsensoreinheit so eingerichtet ist, dass eine Bereitstellung eines initialen absoluten Drehwinkels möglich ist, ohne dass eine kontinuierliche, insbesondere Stand-by-Versorgung, aus insbesondere einer externen Energiequelle des Kraftfahrzeugs erforderlich ist.

Nach einer Ausgestaltung entspricht, wie oben bereits diskutiert, der Fahrzeugsicherheits-Integritätslevel der ASIL-D Klassifikation. Insbesondere kann nach initialer Synchronisation jede der Steuerungseinheiten ein der ASIL-D Klassifikation entsprechendes Signal für den Absolutdrehwinkel bzw. einen ASIL-D konformen absoluten Drehwinkel der Lenkungskomponente ermitteln bzw. erzeugen.

Gemäß Ausgestaltungen kann vorgesehen sein, dass Lenkungskomponente eine Lenkwelle, ein Lenkrad oder ein gelenktes Rad des Kraftfahrzeugs ist. Insbesondere auf Grund der Tatsache, dass die vorgeschlagene Drehwinkelsensoreinheit mit dem hierin vorgeschlagenen Verfahren dazu geeignet ist, auch bei Ausfall eines der Steuerungseinheiten weiterhin einen ASIL-D konformen absoluten Drehwinkel bzw. Absolutdrehwinkel bereitzustellen, eignet sich das vorgeschlagene Verfahren für eine Anwendung bei Lenksystemen, sei es der absolute Drehwinkel des Lenkrads oder der, insbesondere daraus abgeleitete, Drehwinkel eines gelenkten Rads.

Gemäß Ausgestaltungen kann vorgesehen sein, dass jede der Steuerungseinheiten bei der Initialisierung

- eine erste Differenz zwischen dem initialen absoluten Drehwinkel und einem initialen relativen Drehwinkel des ersten Zahnrads ermittelt,

- eine zweite Differenz zwischen dem initialen absoluten Drehwinkel und einem initialen relativen Drehwinkel des zweiten Zahnrads ermittelt,

- und die erste und zweite Differenz als ersten und zweiten absoluten Winkeloffset speichert.

Hierbei ist unter dem initialen absoluten Drehwinkel der absolute Drehwinkel des jeweiligen Zahnrads zu verstehen, der bei der Initialisierung vorliegt. Unter dem initialen relativen Drehwinkel soll verstanden werden der bei Initialisierung am jeweiligen Zahnrad vorliegende Drehwinkel im Bereich zwischen 0° und 360°. Aus der Differenz des absoluten Drehwinkels und des jeweiligen initialen relativen Drehwinkels kann insbesondere die Anzahl der zum absoluten Drehwinkel gehörenden Gesamtumdrehungen ermittelt werden. Aus dieser Anzahl, dem absoluten Winkeloffset und einem nach Initialisierung kontinuierlich gemessenen Drehwinkel kann dann für jedes der Zahnräder bzw. für jeden der einer Steuerungseinheit zugeordneten Drehwinkelsensoren separat der jeweils vorliegende absolute Drehwinkel ermittelt werden. Mithin ist es möglich, dass jede Steuerungseinheit aus den Drehwinkeldaten der jeweils zugeordneten Zahnräder zwei, insbesondere ASIL-B konforme, absolute Drehwinkel ermittelt, und aus diesen beiden absoluten Drehwinkeln einen ASIL-D konformen Drehwinkel plausibilisiert und bereitstellt.

Gemäß Ausgestaltungen kann vorgesehen sein, dass jede der Steuerungseinheiten nach Ermittlung des ersten und des zweiten absoluten Winkeloffsets für die Lenkungskomponente fortlaufend einen jeweiligen ersten und zweiten absoluten Drehwinkel ermittelt, wobei

- der erste absolute Drehwinkel basierend auf einem jeweiligen Istdrehwinkel des ersten Zahnrads und dem ersten absoluten Winkeloffset, und

- der zweite absolute Drehwinkel basierend auf einem jeweiligen relativen Istdrehwinkel des zweiten Zahnrads und dem zweiten absoluten Winkeloffset ermittelt werden, wobei

- die jeweilige Steuerungseinheit die ermittelten ersten und zweiten absoluten Drehwinkel plausibilisiert bzw. zu diagnosezwecken vergleicht und zu einem Absolutdrehwinkel der Lenkungskomponente zusammenführt bzw. einen Absolutdrehwinkel bereitstellt oder ausgibt.

Im Zusammenhang mit der vorliegenden Beschreibung korrespondiert insbesondere der Istdrehwinkel eines Zahnrads zu dem vom jeweiligen Drehwinkelsensor erfassten bzw. gemessenen Drehwinkel.

Der Istdrehwinkel kann verstanden werden, als ein durch einen Drehwinkelsensor gemessener Drehwinkel relativ zu dem bei Initialisierung vorliegenden relativen Drehwinkel.

Gemäß Ausgestaltungen kann vorgesehen sein, dass nach erfolgter Initialisierung und Synchronisierung der erste und zweite absolute Drehwinkel durch die Steuerungseinheit berechnet wird aus einer Anzahl der Gesamtumdrehungen des ersten bzw. zweiten Zahnrads, dem jeweils vorliegenden Istdrehwinkel des ersten bzw. zweiten Zahnrads und dem ersten bzw. zweiten absoluten Winkeloffset.

Die Anzahl der bei Initialisierung vorliegenden Gesamtumdrehungen, d.h. die initiale Anzahl der vollständigen Umdrehungen, kann insbesondere ermittelt werden aus der Differenz des initialen absoluten Drehwinkels und dem initialen relativen Drehwinkel des jeweiligen Drehwinkelsensors. Nach Ermittlung der initialen Anzahl der Gesamtumdrehungen kann die Anzahl der Gesamtumdrehungen fortlaufend aktualisiert werden, insbesondere mittels eines Umlaufzählers, der dazu eingerichtet ist, ausgehend von der Initialisierung vollständige Umdrehungen zu erfassen. Ergibt sich für den Istdrehwinkel ein Winkel von >360° oder <-360°, kann der Umlaufzähler die Anzahl der Gesamtumdrehungen entsprechend inkrementieren/dekrementieren (+1 oder -1 oder umgekehrt).

Gemäß Ausgestaltungen kann vorgesehen sein, dass der erste und zweite absolute Drehwinkel jeweils gemäß der folgenden Formel berechnet werden:

$$\alpha_{1,2}(\beta) = \sum n_{1,2} * 360° + \beta_{1,2} + \gamma_{1,2}.$$

Dabei bezeichnen:

$\alpha_{1,2}$ den ersten bzw. zweiten absoluten Drehwinkel,

$n_{1,2}$ die Anzahl der vollständigen Umdrehungen des ersten bzw. zweiten Zahnrads,

$\beta_{1,2}$ den Istdrehwinkel des ersten bzw. zweiten Zahnrads, bzw. den vom jeweiligen Drehwinkelsensor erfassten Istdrehwinkel, und

$\gamma_{1,2}$ den erste bzw. zweiten absoluten Winkeloffset.

Das bedeutet, dass zur Erfassung bzw. Ermittlung des absoluten Drehwinkels nach erfolgter Initialisierung (mit Plausibilisierung der initialen absoluten Drehwinkel) der jeweils aktuell vorliegende absolute Drehwinkel auf Grundlage der Drehwinkeldaten des jeweiligen ersten bzw. zweiten Drehwinkelsensors ermittelt werden kann. Mithin können im fortlaufenden Betrieb, die relativen Drehwinkel der Drehwinkelsensoren und die ab Initialisierung stattfindenden vollständigen Umdrehungen bzw. Umläufe erfasst werden, woraus die ersten und zweiten absoluten Drehwinkel ermittelt werden können. Die so ermittelten ersten und zweiten absoluten Drehwinkel können als ASIL-B konforme Drehwinkel ermittelt werden, woraus durch Plausibilisierung ein ASIL-D konformer absoluter Drehwinkel ermittelt bzw. bereitgestellt werden kann.

Nach Ausgestaltungen ist eine Drehwinkelsensoreinheit vorgesehen, die gemäß den oben beschriebenen gegenständlichen Merkmalen ausgebildet ist. Hinsichtlich der gegenständlichen Merkmale umfasst eine solche Drehwinkelsensoreinheit insbesondere:

- ein ineinandergreifendes Zahnradpaar mit parallelen Drehachsen und unterschiedlichen Durchmessern, wobei ein erstes Zahnrad, des Zahnradpaars dazu vorgesehen ist, drehfest und drehsynchron mit der Lenkungskomponente verbunden zu werden und ein zweites Zahnrad des Zahnradpaars bezüglich des ersten Zahnrads ortsfest drehbar gelagert ist,

- wobei dem ersten Zahnrad zwei erste Drehwinkelsensoren und dem zweiten Zahnrad zwei zweite Drehwinkelsensoren zugeordnet sind, die jeweils dazu eingerichtet sind, einen relativen Drehwinkel des jeweiligen Zahnrads zu erfassen, und

- eine Steuereinheit mit zwei unabhängigen Steuerungseinheiten.

Die Steuerungseinheiten der Drehwinkelsensoreinheit sind jeweils derart eingerichtet oder programmiert, bzw. sind insbesondere nach Initialisierung derart programmiert, dass diese im Betrieb ein Verfahren nach einem der hierin beschriebenen Ausgestaltungen bewirken. Möglich ist auch, dass die Steuerungseinheiten einen zugeordneten nichtflüchtigen Speicher aufweisen, auf welchem durch einen Prozessor, insbesondere Mikroprozessor, der Steuerungseinheiten ausführbare Instruktionen gespeichert sind, die bei Ausführung durch den Prozessor ein Verfahren nach einem der hierin beschriebenen Ausgestaltungen bewirken.

Nach einer Ausgestaltung ist ein Computer-Programmprodukt vorgesehen, das ausführbare Instruktionen umfasst, die bei Ausführung durch eine hierin beschriebene Drehwinkelsensoreinheit ein Verfahren nach einer der hierin beschriebenen Ausgestaltungen bewirkt.

Nach Ausgestaltungen kann die Drehwinkelsensoreinheit eine Drehwinkelsensoreinheit für ein Kraftfahrzeug bilden, und wobei der absolute Drehwinkel, insbesondere der Absolutdrehwinkel, einem absoluten (plausibilisierten) Drehwinkel einer Lenkwelle, eines Lenkrads und/oder einem absoluten Drehwinkel eines gelenkten Rads des Kraftfahrzeugs entspricht bzw. zugeordnet ist.

Nach Ausgestaltungen können die Steuerungseinheiten in einem redundanten Steuergerät, insbesondere einem elektronischen Steuergerät (ECU - electronic control unit) oder in separaten Steuergeräten implementiert sein.

Nach Ausgestaltungen ist ferner ein Lenksystem, insbesondere ein Steer-by-Wire Lenksystem, für ein Kraftfahrzeug vorgesehen, welches zumindest eine Drehwinkelsensoreinheit nach einer der hierin vorgeschlagenen Ausgestaltungen umfasst.

Nach einer weiteren Ausgestaltung ist ein Kraftfahrzeug mit zumindest einer Drehwinkelsensoreinheit nach einer der hierin beschriebenen Ausgestaltungen und/oder mit einem Lenksystem, insbesondere einem Steer-by-Wire-Lenksystem, nach einem der hierin beschriebenen Ausgestaltungen vorgesehen.

Die Erfindung wird nachstehend anhand von Ausführungsbeispielen unter Bezug auf die beigefügten schematischen Figuren in weiteren Einzelheiten näher erläutert.

Dabei zeigen

FIG. 1    eine schematische Darstellung eines Lenksystems eines Kraftfahrzeugs;

FIG. 2    eine schematische Darstellung des Lenksystems mit einer Drehwinkelsensoreinheit;

FIG. 3    ein Ablaufdiagramm einer verfahrensgemäßen Ausgestaltung

FIG. 4    einen Verfahrensablauf zur Ermittlung eines absoluten Drehwinkels einer Lenkwelle bzw. eines Lenkrads.

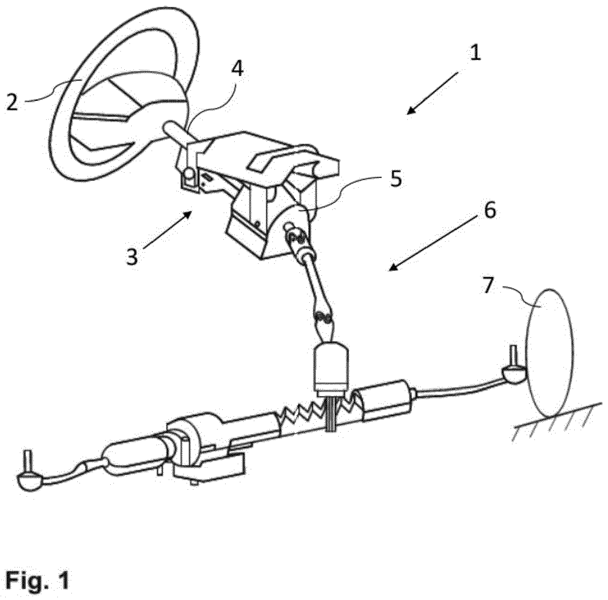

FIG. 1 zeigt eine schematische Darstellung eines Lenksystems 1 bzw. eines Lenkungssystems eines (nicht gezeigten) Kraftfahrzeugs, bei welchem es sich insbesondere, jedoch nicht beschränkt darauf, um ein Elektrofahrzeug handeln kann.

Das Lenksystem 1 umfasst ein Lenkrad 2, eine Lenksäule 3 mit einer Lenkwelle 4, die drehfest mit dem Lenkrad 2 verbunden ist, ein mit der Lenkwelle 4 verbundenes Lenkgetriebe 5 und mit dem Lenkgetriebe 5 verbundene weitere Lenkungskomponenten 6 zur Übertragung einer Drehbewegung des Lenkrads 2 bzw. der Lenkwelle 4 auf die gelenkten Räder 7, von welchen lediglich eines gezeigt ist.

Die Darstellung der FIG. 1 zeigt ohne Beschränkung der Allgemeinheit ein rein mechanisches Lenksystem, bei welchem Lenkbewegungen durch mechanische Komponenten auf die gelenkten Räder 7 übertragen werden. Die Erfindung ist jedoch nicht auf derartige Lenksysteme beschränkt und kann auch bei Lenksystemen verwendet werden, bei welchen die Lenkbewegung elektrisch auf die gelenkten Räder 7 übertragen wird, sog. Steer-by-Wire-Lenksysteme, und bei Lenksystemen die sowohl eine mechanische als auch elektrische Übertragung der Lenkbewegung ermöglichen.

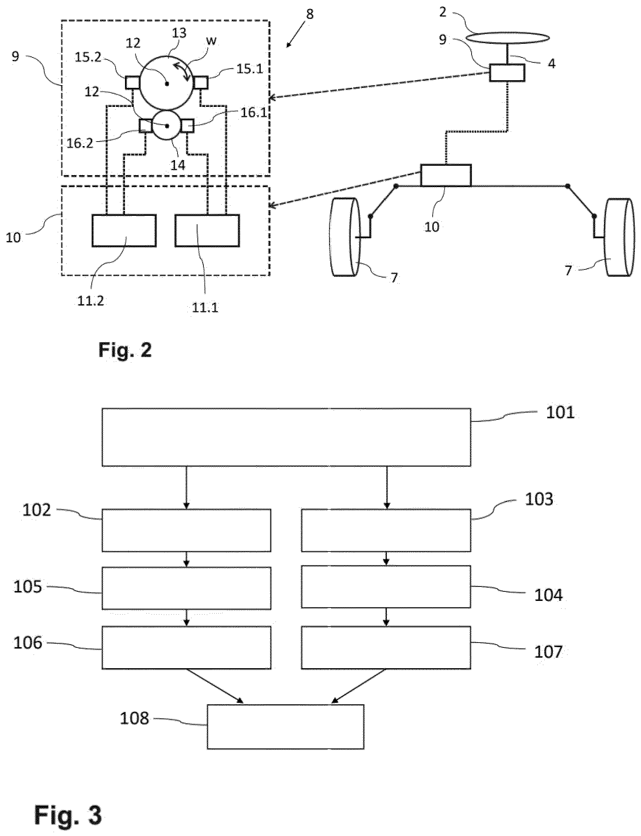

FIG. 2 zeigt eine schematische Darstellung des Lenksystems 1 mit einer Drehwinkelsensoreinheit 8. Obwohl sich die Ausgestaltungen gemäß den Figuren auf eine Drehwinkelsensoreinheit 8 beziehen, die einen Drehwinkel der Lenkwelle 4 bzw. des Lenkrads 2 ermittelt, ist die zu Grunde liegende Erfindung auch anderweitig anwendbar bzw. einsetzbar, insbesondere zur Ermittlung eines Drehwinkels der Räder.

Die Drehwinkelsensoreinheit 8 umfasst eine Sensorkomponente 9 und ein Steuergerät bzw. eine Steuereinheit 10 mit einer ersten Steuerungseinheit 11.1 und einer zweiten Steuerungseinheit 11.2, die nachfolgend zusammen auch als Steuerungseinheiten 11 referenziert werden.

Die Sensorkomponente 9 umfasst ein ineinandergreifendes Zahnradpaar mit parallelen Drehachsen 12 und unterschiedlichen Durchmessern. Ein erstes Zahnrad 13 des Zahnradpaars ist drehfest und drehsynchron mit der Lenkwelle 4 verbunden. Ein zweites Zahnrad 14 des Zahnradpaars ist bezüglich des ersten Zahnrads 13, insbesondere in einem Gehäuse, ortsfest drehbar gelagert, und als solches nicht unmittelbar mit der Lenkwelle 4 verbunden. Bei ordnungsgemäßer Installation ist das erste Zahnrad 13 drehfest mit der Lenkwelle 4 verbunden, so dass sich das erste Zahnrad 13 drehsynchron mit der Lenkwelle 4 dreht. Das zweite Zahnrad 13 führt in Folge der ineinandergreifenden Zähne der Zahnräder 13, 14 eine entsprechende Drehbewegung aus. Mithin ist das erste Zahnrad 13 bezüglich der Drehbewegung unmittelbar an die Lenkwelle 4 gekoppelt, und das zweite Zahnrad 14 lediglich mittelbar über das erste Zahnrad 13.

Dem ersten Zahnrad 13 sind zwei erste Drehwinkelsensoren 15.1 und 15.2 zugeordnet und dem zweiten Zahnrad 14 zwei zweite Drehwinkelsensoren 16.1 und 16.2 zugeordnet. Die ersten Drehwinkelsensoren 15.1 und 15.2 sind jeweils dazu vorgesehen und eingerichtet, den relativen Drehwinkel w des ersten Zahnrads 13 zu erfassen. Die zweiten Drehwinkelsensoren 16.1 und 16.2 sind jeweils dazu eingerichtet, einen relativen Drehwinkel des zweiten Zahnrads 14 zu erfassen. Die Drehwinkelsensoren können insbesondere für eine magnetische oder optische Detektion des Drehwinkels des jeweiligen Zahnrads 13 bzw. 14 eingerichtet sein.

Jede der Steuerungseinheiten 11 ist signaltechnisch jeweils mit einem ersten Drehwinkelsensor 15.1 bzw. 15.2 und jeweils mit einem zweiten Drehwinkelsensor 16.1 bzw. 16.2 verbunden. Im gezeigten Beispiel ist die erste Steuerungseinheit 11.1 mit dem ersten Drehwinkelsensor 15.1 und dem zweiten Drehwinkelsensor 16.1 signaltechnisch verbunden, und die zweite Steuerungseinheit 11.2 ist mit dem ersten Drehwinkelsensor 15.2 und dem zweiten Drehwinkelsensor 16.2 signaltechnisch verbunden, so dass die jeweiligen Steuerungseinheiten 11 Drehwinkelsignale der jeweiligen Drehwinkelsensoren erfassen bzw. empfangen können.

In dem gezeigten Beispiel ist die Sensorkomponente 9 vom Steuereinheit 10 entfernt angeordnet, wobei die Sensorkomponente 9 über Datenleitungen, insbesondere Bus-Leitungen, mit der Steuereinheit 10 verbunden sein kann. Möglich ist auch, dass die Sensorkomponente 9 und die Steuereinheit 10 am gleichen Ort angeordnet sind. Insbesondere können diese auch als integrierte Einheit und/oder als in einem gemeinsamen Gehäuse angeordnete Einheiten ausgebildet sein.

Die Steuerungseinheiten 11.1 und 11.2 sind unabhängig ausgebildet und können insbesondere als unabhängig arbeitende Einheiten auf einem gemeinsamen Chip oder auf getrennten Chips in einem oder mehreren Steuergeräten bzw. Steuereinheiten 10 ausgebildet sein.

Die Steuerungseinheiten 11 sind jeweils dazu eingerichtet, aus Drehwinkeldaten des jeweils zugeordneten ersten Drehwinkelsensors 15.1 bzw. 15.2 und/oder des jeweils zugeordneten zweiten Drehwinkelsensors 16.1 bzw. 16.2 einen absoluten Drehwinkel der Lenksäule 3 bzw. der Lenkwelle 4, und damit des Lenkrads 2 zu ermitteln.

Insbesondere ist es möglich, dass die Steuerungseinheiten 11 aus den jeweiligen relativen Drehwinkeln eines jeweils ersten und zweiten Drehwinkelsensors 15.1 und 16.1 bzw. 15.2 und 16.2, basierend insbesondere auf dem Nonius-Prinzip, einen absoluten Drehwinkel ermitteln. Zum Nonius-Prinzip wird beispielhaft auf die eingangs erwähnte DE 10 2014 208 658 A1 und die DE 10 2008 033 236 A1 verwiesen.

Würden die beiden Steuerungseinheiten 11 im laufenden Betrieb jeweils einen absoluten Drehwinkel unter Verwendung der relativen Drehwinkel der beiden Zahnränder 13 und 14 basierend auf den Nonius-Prinzip ermitteln und diese wie im Stand der Technik bekannt, kontinuierlich vergleichen, so könnten aufgrund der Redundanz der Drehwinkelsensoren 15.1 bzw. 15.2 und 16.1 bzw. 16.2 die Steuerungseinheiten 11 zwar zwei ASIL-B konforme Drehwinkel und durch Plausibilisierung einen ASIL-D konformen Drehwinkel ermitteln. Allerdings besteht ein Nachteil in dieser Verfahrensweise, dass bei Ausfall einer der Steuerungseinheiten 11 nur noch ein ASIL-B konformer Drehwinkel zur Verfügung stünde. Da Drehwinkel der Lenkungskomponenten insbesondere in Steer-by-Wire Systemen eine sicherheitsrelevante Größe darstellen ist generell ASIL-D Konformität erforderlich. Die zu Grunde liegende Erfindung stellt nun eine Möglichkeit bereit, mit welcher bei gleichem Aufbau der Drehwinkelsensoreinheit, jedoch einer anderen als die unmittelbar zuvor beschriebene Verarbeitung der Winkeldaten im Stand der Technik, die einen kontinuierlichen Vergleich der jeweils nach dem Nonius-Prinzip ermittelten Drehwinkel erfordert, ASIL-D Konformität erreicht werden kann, selbst dann, wenn eine der beiden Steuerungseinheiten 11 während des Betriebs ausfällt.

Im Unterschied zu der vorweg beschriebenen Vorgehensweise nach dem Stand der Technik, bei der nach dem Nonius-Prinzip ermittelte absolute Drehwinkel im laufenden Betrieb fortlaufend verglichen werden, um ASIL-D Konformität zu erreichen, schlägt die vorliegende Erfindung einen anderen Weg ein.

Erfindungsgemäß ist vorgesehen, dass bei Systemstart bzw. bei Systeminitialisierung der Steuerungseinheiten 11 bzw. der Drehwinkelsensoreinheit 8, die bei jedem Start eines Kraftfahrzeugs üblicherweise durchgeführt wird, jede der Steuerungseinheiten 11 einen initialen absoluten Drehwinkel unter jeweiliger Verwendung der Winkeldaten des ersten Drehwinkelsensors 15.1 bzw. 15.2 und des zweiten Drehwinkelsensors 16.1 bzw. 16.2, insbesondere nach dem Nonius-Prinzip ermittelt. Diese initialen absoluten Drehwinkel können wegen der Redundanz der Drehwinkelsensoren 15.1 bzw. 15.2 und 16.1 bzw. 16.2 ASIL-B konform ermittelt werden. Durch Synchronisation der so ermittelten initialen absoluten Drehwinkel bei der Initialisierung kann ASIL-D Konformität erreicht werden, d.h. durch die Synchronisation bei der Initialisierung bzw. Systemstart liegen ASIL-D konforme absolute Drehwinkel vor. Hierzu reicht eine einmalige Synchronisation bei Systemstart aus.

Gemäß dem der Erfindung zu Grunde liegenden Verfahren ermittelt jede der Steuerungseinheiten 11 nach der Synchronisation im laufenden Betrieb der Drehwinkelsensoreinheit 8 aus Winkeldaten, bzw. Drehwinkeldaten, eines zugeordneten ersten Drehwinkelsensors 15.1 bzw. 15.2 einerseits und aus Winkeldaten eines zugeordneten zweiten Drehwinkelsensors 16.1 bzw. 16.2 andererseits fortlaufend jeweils einen ersten und zweiten absoluten Drehwinkel der Lenkwelle 4. Wegen der anfänglichen ASIL-D Konformität sind die so ermittelten ersten und zweiten absoluten Drehwinkel einer jeden Steuerungseinheit 11 jeweils ASIL-B konform, so dass durch Plausibilisierung der jeweils beiden ASIL-B konformen absoluten Drehwinkel jede Steuerungseinheit 11 einen ASIL-D konformen Drehwinkel bereitstellen kann. Das hat den Vorteil, dass selbst bei Ausfall einer der Steuerungseinheiten 11 weiterhin ASIL-D Konformität besteht.

In einem konkreten Beispiel soll nachfolgend anhand eines Ablaufdiagramms der FIG. 3 gezeigt werden, wie die Steuerungseinheiten 11 die absoluten Drehwinkel im laufenden Betrieb ermitteln. Die nachfolgenden Verfahrensschritte bzw. der nachfolgende Verfahrensgang werden/wird von jeder der Steuerungseinheiten 11 ausgeführt. Zur Vereinfachung beziehen sich die nachfolgenden Ausführungen im Singular lediglich auf eine Steuerungseinheit 11, obgleich beide Steuerungseinheiten 11 analog arbeiten.

Nach Synchronisation 101 der initialen absoluten Drehwinkel ermittelt die Steuerungseinheit 11 in einem Verfahrensschritt 102 eine erste Differenz zwischen dem (plausibilisierten) initialen absoluten Drehwinkel und einem initialen relativen Drehwinkel des ersten Zahnrads 13, wobei der initiale relative Drehwinkel des ersten Zahnrads 13 aus einem Winkelsignal des ersten Drehwinkelsensors 15.1 bzw. 15.2 ermittelt werden kann.

In einem Verfahrensschritt 103 ermittelt die Steuerungseinheit 11 eine zweite Differenz zwischen dem (plausibilisierten) initialen absoluten Drehwinkel und einem initialen relativen Drehwinkel des zweiten Zahnrads 14, wobei der initiale relative Drehwinkel des zweiten Zahnrads 14 aus einem Winkelsignal des zweiten Drehwinkelsensors 16.1 bzw. 16.2 ermittelt werden kann.

In den Verfahrensschritten 104 bzw. 105 speichert die Steuerungseinheit 11 die erste und zweite Differenz als ersten und zweiten absoluten Winkeloffset.

Die Verfahrensschritte 102 und 103 bzw. 104 und 105 können, wie gezeigt, jeweils zeitgleich oder alternativ in geeigneter Weise auch hintereinander ausgeführt werden.

Im weiteren Betrieb der Steuerungseinheit 11 ermittelt diese (lediglich) basierend auf Winkeldaten des ersten Zahnrads 13 im Verfahrensschritt 106 einen ersten absoluten Drehwinkel, der, technisch betrachtet, dem absoluten Drehwinkel der Lenkwelle 4 entspricht, und auf Grundlage von Winkeldaten des ersten Zahnrads 13 ermittelt wird.

Ferner ermittelt die der Steuerungseinheit 11 (lediglich) basierend auf den Winkeldaten des zweiten Zahnrads 14 im Verfahrensschritt 107 einen zweiten absoluten Drehwinkel, der, technisch betrachtet, ebenfalls dem absoluten Drehwinkel der Lenkwelle 4 entspricht, und aus Winkeldaten des zweiten Zahnrads 14 ermittelt wird.

Auf Grund der initialen Synchronisation 101 sind die ersten und zweiten absoluten Drehwinkel ASIL-B konform.

Im Verfahrensschritt 108 führt die Steuerungseinheit 11 eine Plausibilisierung, insbesondere basierend auf einem Vergleich der ersten und zweiten absoluten Drehwinkel, durch, und kann aus den beiden ASIL-B konformen Drehwinkeln einen ASIL-D konformen Drehwinkel ermitteln.

Die beschriebenen Verfahrensschritte nach Initialisierung werden im weiteren Betrieb der Steuerungseinheit 11 fortlaufend ausgeführt, wobei der Drehwinkel durchwegs ASIL-D konform ermittelt werden kann. Das bedeutet, jede der Steuerungseinheiten 11 kann den Drehwinkel ASIL-D konform ermitteln. Zwar werden i.d.R. keine zwei ASIL-D konformen Drehwinkel benötigt, allerdings bietet das Verfahren den Vorteil einer verbesserten Ausfallsicherheit, denn selbst bei Ausfall einer der beiden Steuerungseinheiten 11, sollte insbesondere eine Plausibilisierung bei einer der Steuerungseinheiten 11 nicht (mehr) möglich sein, liegt durch die jeweils andere Steuerungseinheit 11 weiterhin ASIL-D Konformität vor, was bei dem oben beschriebenen Vorgehen nach dem Stand der Technik, bei dem eine Plausibilisierung auf Grundlage eines Vergleichs des durch die erste Steuerungseinheit ermittelten absoluten Drehwinkels mit einem durch die zweite Steuerungseinheit ermittelten Drehwinkels, die jeweils ASIL-B konform sind, nicht der Fall ist.

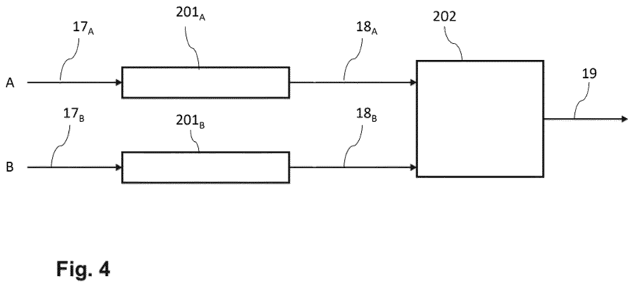

FIG. 4 zeigt einen Verfahrensablauf im Rahmen eines konkreten Beispiels zur Ermittlung der ersten und zweiten absoluten Drehwinkel.

Der Verfahrensablauf zeigt zwei Kanäle A, B, wobei der erste Kanal A der Ermittlung des ersten absoluten Drehwinkels für das erste Zahnrad 13 und der zweite Kanal der Ermittlung des zweiten absoluten Drehwinkels für das zweite Zahnrad 14 zugeordnet ist.

Als Eingangsgröße $17_A$ für den Kanal A dient der vom ersten Drehwinkelsensor 15.1 bzw. 15.2 ermittelte Istdrehwinkel $\beta_A$ des ersten Zahnrads 13. Entsprechend dient als Eingangsgröße $17_B$ für den Kanal B der vom zweiten Drehwinkelsensor 16.1 bzw. 16.2 ermittelte Istdrehwinkel $\beta_B$ des zweiten Zahnrads 14.

Im Verfahrensschritt $201_A$ wird im ersten Kanal A der erste absolute Drehwinkel $\alpha_1$ ermittelt, basierend auf folgender Formel:

$$\alpha_1 = n_1 * 360° + \beta_1 + \gamma_1.$$

Dabei sind $n_1$ die Anzahl der für das erste Zahnrad 13 jeweils vorliegenden vollständigen Umdrehungen, $\beta_1$, wie oben erwähnt, der Istdrehwinkel des ersten Drehwinkelsensors 15.1 bzw. 15.2, und $\gamma_1$ bezeichnet den für das erste Zahnrad 13 ermittelten ersten absoluten Winkeloffset.

Analog wird im zweiten Kanal B, im Verfahrensschritt $201_B$ der zweite absolute Drehwinkel $\alpha_2$ ermittelt, basierend auf folgender Formel:

$$\alpha_2 = n_2 * 360° + \beta_2 + \gamma_2.$$

Dabei sind $n_2$ die Anzahl der für das zweite Zahnrad 14 jeweils vorliegenden vollständigen Umdrehungen, $\beta_2$, wie oben erwähnt, der Istdrehwinkel des zweiten Drehwinkelsensors 16.1 bzw. 16.2, und $\gamma_2$ bezeichnet den für das zweite Zahnrad 13 ermittelten zweiten absoluten Winkeloffset.

Ausgangsgrößen $18_A$ und $18_B$ des ersten Kanals A bzw. zweiten Kanals B sind mithin der erste absolute Drehwinkel $\alpha_1$ und der zweite absolute Drehwinkel $\alpha_2$, die auf Grund der initialen Synchronisation beide ASIL-B konform sind.

Im Verfahrensschritt 202 erfolgt ein Vergleich, verbunden mit einer Diagnose, insbesondere im Sinne einer Plausibilisierung, der absoluten Drehwinkel $\alpha_1$ und $\alpha_2$. Bei erfolgreicher Plausibilisierung stellt die Steuereinheit 11 als Ausgangsgröße 19 einen (plausibilisierten) absoluten Drehwinkel L bereit, hierin auch Absolutdrehwinkel bezeichnet. Der Absolutdrehwinkel L ist in Folge der ASIL-B Konformität der absoluten Drehwinkel $\alpha_1$ und $\alpha_2$ ASIL-D konform, und eignet sich mithin insbesondere für elektronische Steuerungsaufgaben eines elektronischen bzw. elektrischen Lenksystems. Dabei ist zu beachten, dass die Kanäle A und B lediglich einer der Steuerungseinheiten 11 zugeordnet sind, mithin also bei ordnungsgemäßer Funktion der beiden Steuerungseinheiten 11 zwei ASIL-D konforme Drehwinkel vorliegen. Fällt eine der Steuerungseinheiten 11 aus, liegt dennoch noch ein ASIL-D konformer Drehwinkel vor, den dann die noch arbeitende Steuerungseinheit 11 ermittelt.

Aus den obigen Ausführungen wird deutlich, dass das hierin vorgeschlagene Verfahren die zu Grunde liegende Aufgabe löst.

## Bezugszeichenliste

| | |
|---|---|
| 1 | Lenksystem |
| 2 | Lenkrad |
| 3 | Lenksäule |
| 4 | Lenkwelle |
| 5 | Lenkgetriebe |
| 6 | weitere Lenkungskomponenten |
| 7 | gelenktes Rad |
| 8 | Drehwinkelsensoreinheit |
| 9 | Sensorkomponente |
| 10 | Steuereinheit |
| 11, 11.1, 11.2 | Steuerungseinheit |
| 12 | Drehachse |
| 13 | erstes Zahnrad |
| 14 | zweites Zahnrad |
| 15.1, 15.2 | erster Drehwinkelsensor |
| 16.1, 16.2 | zweiter Drehwinkelsensor |
| 17A, 17B | Eingangsgrößen |
| 18A, 18B | Ausgangsgrößen |
| 19 | Ausgangsgröße |
| 101 - 108 | Verfahrensschritte |
| 201, 202 | Verfahrensschritte |
| A, B | Kanäle |
| w | relativer Drehwinkel |
| L | Absolutdrehwinkel |

## Patentansprüche

1. Verfahren zum Betrieb einer Drehwinkelsensoreinheit (8) zum Einsatz bei Lenksystemen (1) von Kraftfahrzeugen auf einem vorgegebenen Fahrzeugsicherheits-Integritätslevel (ASIL-D), wobei die Drehwinkelsensoreinheit (8) dazu ausgebildet ist, den absoluten Drehwinkel einer Lenkungskomponente, insbesondere den absoluten Drehwinkel eines Lenkrads (2), zu ermitteln, wobei

- die Drehwinkelsensoreinheit (8) ein ineinandergreifendes Zahnradpaar (13, 14) mit parallelen Drehachsen (12) und unterschiedlichen Durchmessern aufweist, wobei ein erstes Zahnrad (13), des Zahnradpaars (13, 14) dazu vorgesehen ist, drehfest und drehsynchron mit der Lenkungskomponente verbunden zu werden und ein zweites Zahnrad (14) des Zahnradpaars (13, 14) bezüglich des ersten Zahnrads (13) ortsfest drehbar gelagert ist,
- wobei dem ersten Zahnrad (13) zwei erste Drehwinkelsensoren (15.1, 15.2) und dem zweiten Zahnrad (14) zwei zweite Drehwinkelsensoren (16.1, 16.2) zugeordnet sind, die jeweils dazu eingerichtet sind, einen relativen Drehwinkel des jeweiligen Zahnrads (13, 14) zu erfassen, und

- die Drehwinkelsensoreinheit (8) ferner eine Steuereinheit (10) mit zwei unabhängigen Steuerungseinheiten (11.1, 11.2) umfasst, wobei jeder Steuerungseinheit (11.1, 11.2) ein erster (15.1 bzw. 15.2) und zweiter Drehwinkelsensor (16.1 bzw. 16.2) zugeordnet ist, und die Steuerungseinheiten (11.1, 11.2) jeweils dazu eingerichtet sind, aus Drehwinkeldaten eines jeweils zugeordneten ersten (15.1 bzw. 15.2) und/oder zweiten Drehwinkelsensors (16.1 bzw. 16.2) einen absoluten Drehwinkel der Lenkungskomponente zu ermitteln und bereitzustellen,

und wobei

- zum Betrieb der Drehwinkelsensoreinheit (8) mit dem vorgegebenen Fahrzeugsicherheits-Integritätslevel bei Initialisierung der Drehwinkelsensoreinheit (8)

  ○ jede Steuerungseinheit (11.1, 11.2) unter Verwendung von Drehwinkeldaten des jeweils zugeordneten ersten (15.1 bzw. 15.2) und zweiten Drehwinkelsensors (16.1 bzw. 16.2) einen initialen absoluten Drehwinkel für die Lenkungskomponente ermittelt, und
  ○ die Steuerungseinheiten (111, 11.2) bezüglich der ermittelten initialen absoluten Drehwinkel einmalig initial synchronisiert (101) werden, wobei

- jede Steuerungseinheit (11.1, 11.2) nach initialer Synchronisierung (101)

  ○ aus Drehwinkeldaten eines zugeordneten ersten Drehwinkelsensors (15.1 bzw. 15.2) einerseits und aus Drehwinkeldaten eines zugeordneten zweiten Drehwinkelsensors (16.1 bzw. 16.2) andererseits fortlaufend jeweils einen ersten und zweiten absoluten Drehwinkel der Lenkungskomponente ermittelt und diese plausibilisiert zu einem Absolutdrehwinkel (L) der Lenkungskomponente zusammenführt.

2.  Verfahren nach Anspruch 1, wobei der Fahrzeugsicherheits-Integritätslevel der ASIL-D Klassifikation entspricht.

3.  Verfahren nach einem der vorangehenden Ansprüche, wobei die Lenkungskomponente eine Lenkwelle (4), ein Lenkrad (2) oder ein gelenktes Rad (7) des Kraftfahrzeugs ist.

4.  Verfahren nach einem der vorangehenden Ansprüche, wobei jede der Steuerungseinheiten (11.1, 11.2) bei der Initialisierung

- eine erste Differenz zwischen dem initialen absoluten Drehwinkel und einem initialen relativen Drehwinkel des ersten Zahnrads (13) ermittelt,
- eine zweite Differenz zwischen dem initialen absoluten Drehwinkel und einem initialen relativen Drehwinkel des zweiten Zahnrads (14) ermittelt,
- und die erste und zweite Differenz als ersten und zweiten absoluten Winkeloffset speichert.

5.  Verfahren nach Anspruch 4, wobei jede der Steuerungseinheiten (11.1, 11.2) nach Ermittlung des ersten und des zweiten absoluten Winkeloffsets für die Lenkungskomponente fortlaufend einen jeweiligen ersten und zweiten absoluten Drehwinkel ermittelt, wobei

  - der erste absolute Drehwinkel basierend auf einem jeweiligen Istdrehwinkel des ersten Zahnrads (13) und dem ersten absoluten Winkeloffset, und
  - der zweite absolute Drehwinkel basierend auf einem jeweiligen relativen Istdrehwinkel des zweiten Zahnrads (14) und dem zweiten absoluten Winkeloffset ermittelt werden, wobei
  - die jeweilige Steuerungseinheit (11.1, 11.2) die ermittelten ersten und zweiten absoluten Drehwinkel zu diagnosezwecken vergleicht und zum Absolutdrehwinkel (L) der Lenkungskomponente zusammenführt.

6.  Verfahren nach Anspruch 5, wobei nach erfolgter Initialisierung und Synchronisation (101) der erste und zweite absolute Drehwinkel, durch die Steuerungseinheit (11.1, 11.2), berechnet wird aus einer Anzahl der Gesamtumdrehungen des ersten bzw. zweiten Zahnrads (13, 14), dem jeweils vorliegenden Istdrehwinkel des ersten bzw. zweiten Zahnrads (13, 14) und dem ersten bzw. zweiten absoluten Winkeloffset.

7.  Verfahren nach Anspruch 5 oder 6, wobei der erste und zweite absolute Drehwinkel jeweils gemäß der folgenden Formel berechnet werden:

$$\alpha_{1,2}(\beta) = \sum n_{1,2} * 360° + \beta_{1,2} + \gamma_{1,2},$$

wobei

  $\alpha_{1,2}$ der erste bzw. zweite absolute Drehwinkel, $n_{1,2}$ die Anzahl der vollständigen Umdrehungen des ersten bzw. zweiten Zahnrads (13, 14), $\beta_{1,2}$ der Istdrehwinkel des ersten bzw. zweiten Zahnrads (13, 14) und $\gamma_{1,2}$ der erste bzw. zweite absolute Winkeloffset sind.

8. Drehwinkelsensoreinheit (8), welche gemäß den gegenständlichen Merkmalen nach Anspruch 1 ausgebildet ist und eine Steuereinheit (10) mit zwei unabhängigen Steuerungseinheiten (11.1, 11.2) umfasst, wobei die Steuerungseinheiten (11.1, 11.2) derart programmiert sind, dass diese im Betrieb ein Verfahren nach einem der Ansprüche 1 bis 7 bewirken, oder einen zugeordneten nichtflüchtigen Speicher aufweisen, auf welchem durch einen Prozessor, insbesondere Mikroprozessor, der Steuerungseinheiten (11.1, 11.2) ausführbare Instruktionen gespeichert sind, die bei Ausführung durch den Prozessor ein Verfahren nach einem der Ansprüche 1 bis 7 bewirken.

9. Drehwinkelsensoreinheit (8) nach Anspruch 8, ausgebildet als Drehwinkelsensoreinheit (8) für eine Lenkungskomponente eines Kraftfahrzeugs, wobei der Absolutdrehwinkel (L) einem absoluten Drehwinkel einer Lenkwelle (4), eines Lenkrads (2) entspricht und/oder zu einem absoluten Drehwinkel eines gelenkten Rads (7) des Kraftfahrzeugs korrespondiert.

10. Drehwinkelsensoreinheit (8) nach Anspruch 8 oder 9, wobei die Steuerungseinheiten (11.1, 11.2) in einem redundanten Steuergerät oder in separaten Steuergeräten implementiert sind.

11. Lenksystem (1), insbesondere Steer-by-Wire-Lenksystem, für ein Kraftfahrzeug umfassend zumindest eine Drehwinkelsensoreinheit (8) nach einem der Ansprüche 8 bis 10.

12. Kraftfahrzeug mit zumindest einer Drehwinkelsensoreinheit (8) nach einem der Ansprüche 8 bis 10 und/oder einem Lenksystem (1) nach Anspruch 11.

## Claims

1. Method for operating a rotation angle sensor unit (8) for use in steering systems (1) of motor vehicles at a predetermined vehicle safety integrity level (ASIL-D), wherein the rotation angle sensor unit (8) is designed to determine the absolute rotation angle of a steering component, in particular the absolute rotation angle of a steering wheel (2), wherein

   - the rotation angle sensor unit (8) has an intermeshing gearwheel pair (13, 14) with parallel axes of rotation (12) and different diameters, wherein a first gearwheel (13) of the gearwheel pair (13, 14) is provided to be connected to the steering component for conjoint rotation and in a rotationally synchronized manner and a second gearwheel (14) of the gearwheel pair (13, 14) is mounted in a rotationally fixed manner with respect to the first gearwheel (13),
   - wherein two first rotation angle sensors (15.1, 15.2) are assigned to the first gearwheel (13) and two second rotation angle sensors (16.1, 16.2) are assigned to the second gearwheel (14), which rotation angle sensors are each set up to detect a relative rotation angle of the respective gearwheel (13, 14), and
   - the rotation angle sensor unit (8) further comprises a control unit (10) with two independent controller units (11.1, 11.2), wherein each controller unit (11.1, 11.2) is assigned a first (15.1 or 15.2) and a second rotation angle sensor (16.1 or 16.2), and the controller units (11.1, 11.2) are in each case set up to determine and provide an absolute rotation angle of the steering component from rotation angle data of a respectively assigned first (15.1 or 15.2) and/or second rotation angle sensor (16.1 or 16.2),
   and wherein
   - for operating the rotation angle sensor unit (8) with the specified vehicle safety integrity level, at the time of initialization of the rotation angle sensor unit (8)

      ∘ each controller unit (11.1, 11.2) determines an initial absolute rotation angle for the steering component using rotation angle data from the respectively assigned first (15.1 or 15.2) and second rotation angle sensor (16.1 or 16.2), and
      ∘ the controller units (111, 11.2) are initially synchronized (101) once with respect to the determined initial absolute rotation angles, wherein

   - each controller unit (11.1, 11.2) after initial synchronization (101)

      ∘ continuously determines a first and second absolute rotation angle of the steering component from rotation angle data of an associated first rotation angle sensor (15.1 or 15.2) on the one hand and from rotation angle data of an associated second rotation angle sensor (16.1 or 16.2) on the other hand and combines these in a plausibilized manner to form an absolute rotation angle (L) of the steering component.

2. Method according to Claim 1, wherein the vehicle safety integrity level corresponds to the ASIL-D classification.

3. Method according to one of the preceding claims, wherein the steering component is a steering shaft (4), a steering wheel (2) or a steered wheel (7) of the motor vehicle.

**4.** Method according to one of the preceding claims, wherein each of the controller units (11.1, 11.2) at the time of initialization

- determines a first difference between the initial absolute rotation angle and an initial relative rotation angle of the first gearwheel (13),
- determines a second difference between the initial absolute rotation angle and an initial relative rotation angle of the second gearwheel (14),
- and stores the first and second difference as the first and second absolute angle offset.

**5.** Method according to Claim 4, wherein each of the controller units (11.1, 11.2) continuously determines a respective first and second absolute rotation angle after determining the first and second absolute angle offsets for the steering component, wherein

- the first absolute rotation angle is determined based on a respective actual rotation angle of the first gearwheel (13) and the first absolute angle offset, and
- the second absolute rotation angle is determined based on a respective relative actual rotation angle of the second gearwheel (14) and the second absolute angle offset, wherein
- the respective controller unit (11.1, 11.2) compares the determined first and second absolute rotation angles for diagnostic purposes and combines them to form the absolute rotation angle (L) of the steering component.

**6.** Method according to Claim 5, wherein after initialization and synchronization (101) the first and second absolute rotation angle is calculated by the controller unit (11.1, 11.2) from a number of total revolutions of the first or second gearwheel (13, 14), the respective actual rotation angle of the first and second gearwheel (13, 14) and the first second absolute angle offset, respectively.

**7.** Method according to Claim 5 or 6, wherein the first and second absolute rotation angles are each calculated according to the following formula:

$$\alpha_{1,2}(\beta) = \sum n_{1,2} * 360° + \beta_{1,2} + \gamma_{1,2},$$

wherein

$\alpha_{1,2}$ is the first and second absolute rotation angle, respectively,
$n_{1,2}$ is the number of complete revolutions of the first and second gearwheel (13, 14), respectively,
$\beta_{1,2}$ is the actual rotation angle of the first and second gearwheel (13, 14), respectively, and
$\gamma_{1,2}$ is the first and second absolute angle offset, respectively.

**8.** Rotation angle sensor unit (8), which is designed in accordance with the present features according to Claim 1 and comprises a control unit (10) with two independent controller units (11.1, 11.2), wherein the controller units (11.1, 11.2) are programmed in such a way that, in operation, they effect a method according to one of Claims 1 to 7, or have an associated non-volatile memory on which instructions executable by a processor, in particular a microprocessor, of the controller units (11.1, 11.2) are stored, which instructions, when executed by the processor, effect a method according to one of Claims 1 to 7.

**9.** Rotation angle sensor unit (8) according to Claim 8, designed as a rotation angle sensor unit (8) for a steering component of a motor vehicle, wherein the absolute rotation angle (L) corresponds to an absolute rotation angle of a steering shaft (4), a steering wheel (2) and/or corresponds to an absolute rotation angle of a steered wheel (7) of the motor vehicle.

**10.** Rotation angle sensor unit (8) according to Claim 8 or 9, wherein the controller units (11.1, 11.2) are implemented in a redundant control unit or in separate control units.

**11.** Steering system (1), in particular steer-by-wire steering system, for a motor vehicle comprising at least one rotation angle sensor unit (8) according to one of Claims 8 to 10.

**12.** Motor vehicle with at least one rotation angle sensor unit (8) according to one of Claims 8 to 10 and/or a steering system (1) according to Claim 11.

**Revendications**

**1.** Procédé pour faire fonctionner une unité de capteur d'angle de rotation (8) destinée à être utilisée dans des systèmes de direction (1) de véhicules automobiles à un niveau d'intégrité de sécurité du véhicule prédéterminé (ASIL-D), dans lequel l'unité de capteur d'angle de rotation (8) est conçue pour déterminer l'angle de rotation absolu d'un composant de direction, en particulier l'angle de rotation absolu d'un volant (2), dans lequel

- l'unité de capteur d'angle de rotation (8) comporte une paire de roues dentées engrenées (13, 14) avec des axes de rotation parallèles (12) et des diamètres différents, dans lequel une première roue dentée (13) de la paire de roues dentées (13, 14) est prévue pour être reliée au composant de direction afin de tourner conjointement et de manière synchronisée en rotation, et une deuxième roue dentée (14) de la paire de roues dentées (13, 14) est montée rotative à poste fixe par rapport à la première roue dentée (13),

- dans lequel deux premiers capteurs d'angle de rotation (15.1, 15.2) sont associés à la première roue dentée (13) et deux seconds capteurs d'angle de rotation (16.1, 16.2) sont associés à la deuxième roue dentée (14), lesquels capteurs d'angle de rotation sont chacun configurés pour détecter un angle de rotation relatif de la roue dentée respective (13, 14), et

- l'unité de capteur d'angle de rotation (8) comprend en outre une unité de commande (10) avec deux unités de contrôle indépendantes (11.1, 11.2), dans laquelle chaque unité de contrôle (11.1, 11.2) est associée à un premier (15.1 ou 15.2) et à un deuxième capteur d'angle de rotation (16.1 ou 16.2), et les unités de contrôle (11.1, 11.2) sont chacune configurées pour déterminer et fournir un angle de rotation absolu du composant de direction à partir des données d'angle de rotation d'un premier (15.1 ou 15.2) et/ou d'un deuxième capteur d'angle de rotation (16.1 ou 16.2) respectivement attribué, et dans lequel

- pour faire fonctionner l'unité de capteur d'angle de rotation (8) avec le niveau d'intégrité de sécurité du véhicule spécifié, au moment de l'initialisation de l'unité de capteur d'angle de rotation (8)

◦ chaque unité de contrôle (11.1, 11.2) détermine un angle de rotation absolu initial pour le composant de direction à l'aide des données d'angle de rotation provenant du premier (15.1 ou 15.2) et du deuxième capteur d'angle de rotation (16.1 ou 16.2) respectivement attribués, et
◦ les unités de contrôle (111, 11.2) sont initialement synchronisées (101) une fois par rapport aux angles de rotation absolus initiaux déterminés, dans lequel

- chaque unité de contrôle (11.1, 11.2) après la synchronisation initiale (101)

◦ détermine en continu un premier et un deuxième angle de rotation absolu du composant de direction à partir des données d'angle de rotation d'un premier capteur d'angle de rotation associé (15.1 ou 15.2) d'une part, et à partir des données d'angle de rotation d'un deuxième capteur d'angle de rotation associé (16.1 ou 16.2) d'autre part, et les combine de manière plausible pour former un angle de rotation absolu (L) du composant de direction.

2. Procédé selon la revendication 1, dans lequel le niveau d'intégrité de sécurité du véhicule correspond à la classification ASIL-D.

3. Procédé selon l'une des revendications précédentes, dans lequel le composant de direction est un arbre de direction (4), un volant (2) ou une roue directrice (7) du véhicule à moteur.

4. Procédé selon l'une des revendications précédentes, dans lequel chacune des unités de contrôle (11.1, 11.2) au moment de l'initialisation

- détermine une première différence entre l'angle de rotation absolu initial et un angle de rotation relatif initial de la première roue dentée (13),
- détermine une deuxième différence entre l'angle de rotation absolu initial et un angle de rotation relatif initial de la deuxième roue dentée (14),
- et stocke les première et deuxième différences en tant que premier et deuxième décalages angulaires absolus.

5. Procédé selon la revendication 4, dans lequel chacune des unités de contrôle (11.1, 11.2) détermine en continu un premier et un deuxième angle de rotation absolus respectifs après avoir déterminé les premier et deuxième décalages angulaires absolus pour le composant de direction, dans lequel

- le premier angle de rotation absolu est déterminé sur la base d'un angle de rotation réel respectif de la première roue dentée (13) et du premier décalage angulaire absolu, et
- le deuxième angle de rotation absolu est déterminé sur la base d'un angle de rotation réel relatif respectif de la deuxième roue dentée (14) et du deuxième décalage angulaire absolu, dans lequel
- l'unité de contrôle respective (11.1, 11.2) compare les premier et deuxième angles de rotation absolus déterminés à des fins de diagnostic et les combine pour former l'angle de rotation absolu (L) du composant de direction.

6. Procédé selon la revendication 5, dans lequel, après l'initialisation et la synchronisation (101), le premier et le deuxième angle de rotation absolus sont calculés par l'unité de contrôle (11.1, 11.2) à partir d'un nombre de tours totaux de la première ou de la deuxième roue dentée (13, 14), l'angle de rotation réel respectif de la première et de la deuxième roue dentée (13, 14) et le premier et le deuxième décalage angulaire absolu, respectivement.

**7.** Procédé selon la revendication 5 ou 6, dans lequel les premier et deuxième angle de rotation absolus sont chacun calculés selon la formule suivante :

$$\alpha_{1,2}(\beta) = \sum n_{1,2} * 360° + \beta_{1,2} + \gamma_{1,2},$$

où

$\alpha_{1,2}$ est respectivement le premier et le deuxième angle de rotation absolu,

$n_{1,2}$ est le nombre de tours complets de la première et de la deuxième roue dentée (13, 14), respectivement,

$\beta_{1,2}$ est l'angle de rotation réel de la première et de la deuxième roue dentée (13, 14), respectivement, et

$\gamma_{1,2}$ est le premier et le deuxième décalage angulaire absolu, respectivement.

**8.** L'unité de capteur d'angle de rotation (8), qui est conçu conformément aux caractéristiques de la revendication 1 et comprend une unité de commande (10) avec deux unités de contrôle indépendantes (11.1, 11.2), dans laquelle les unités de contrôle (11.1, 11.2) sont programmées de telle manière qu'elles mettent en œuvre, en fonctionnement, un procédé selon l'une des revendications 1 à 7, ou comportent une mémoire non volatile associée sur laquelle sont stockées des instructions exécutables par un processeur, en particulier un microprocesseur, des unités de contrôle (11.1, 11.2), lesquelles instructions, lorsqu'elles sont exécutées par le processeur, mettent en œuvre un procédé selon l'une des revendications 1 à 7.

**9.** L'unité de capteur d'angle de rotation (8) selon la revendication 8, conçu comme capteur d'angle de rotation (8) pour un composant de direction d'un véhicule automobile, dans lequel l'angle de rotation absolu (L) correspond à un angle de rotation absolu d'un arbre de direction (4), d'un volant (2) et/ou correspond à un angle de rotation absolu d'une roue directrice (7) du véhicule automobile.

**10.** L'unité de capteur d'angle de rotation (8) selon la revendication 8 ou 9, dans lequel les unités de commande (11.1, 11.2) sont mises en œuvre dans une unité de commande redondante ou dans des unités de commande séparées.

**11.** Système de direction (1), en particulier système de direction de type steer-by-wire, pour un véhicule automobile comprenant au moins une unité de capteur d'angle de rotation (8) selon l'une des revendications 8 à 10.

**12.** Véhicule automobile avec au moins une unité de capteur d'angle de rotation (8) selon l'une des revendications 8 à 10 et/ou un système de direction (1) selon la revendication 11.

**Fig. 1**

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014208658 A1
- DE 102008033236 A1
- DE 102014105682 A1